(19) Europäisches Patentamt

European Patent Office

Office européen des brevets

(11) **EP 0 547 924 B1**

## (12) FASCICULE DE BREVET EUROPEEN

(45) Date de publication et mention
de la délivrance du brevet:
**05.02.1997 Bulletin 1997/06**

(51) Int. Cl.$^6$: **C01F 17/00**, B01J 23/10

(21) Numéro de dépôt: **92402846.7**

(22) Date de dépôt: **16.10.1992**

(54) **Composition à base d'oxyde cérique, préparation et utilisation**

Zer-oxydenthaltende Zusammensetzung, ihre Herstellung und ihre Benutzung

Composition containing ceric oxide, its preparation and use

(84) Etats contractants désignés:
**AT BE CH DE DK ES FR GB GR IT LI LU NL PT SE**

(30) Priorité: **09.12.1991 FR 9115210**

(43) Date de publication de la demande:
**23.06.1993 Bulletin 1993/25**

(73) Titulaire: **RHONE-POULENC CHIMIE
92408 Courbevoie Cédex (FR)**

(72) Inventeurs:
• **Bonneau, Lionnel
F-17540 Angliers (FR)**
• **Chopin, Thierry
F-93200 Saint Denis (FR)**
• **Touret, Olivier
F-93300 Aubervilliers (FR)**

(74) Mandataire: **Dubruc, Philippe et al
RHONE-POULENC CHIMIE,
Direction de la Propriété Industrielle,
25, Quai Paul Doumer
92408 Courbevoie Cédex (FR)**

(56) Documents cités:
**EP-A- 0 184 506          EP-A- 0 207 857
EP-A- 0 388 567**

Remarques:
Le dossier contient des informations techniques
présentées postérieurement au dépôt de la
demande et ne figurant pas dans le présent
fascicule.

## Description

La présente invention concerne une nouvelle composition à base d'oxyde cérique. Elle concerne plus particulièrement une composition à base d'oxyde cérique contenant du silicium, qui présente une surface spécifique élevée aux hautes températures.

L'invention vise également un procédé pour l'obtention d'une telle composition, ainsi que l'utilisation de cette dernière, notamment dans le domaine de la catalyse.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER - EMMETT - TELLER décrite dans le périodique "The Journal of American Society, 60, 309 (1938)". Les surfaces spécifiques données sont mesurées sur des produits ayant subi une opération de calcination à la température et pendant le temps indiqués.

Par ailleurs, on utilise indifféremment dans cette description les expressions "composition à base d'oxyde cérique contenant du silicium", "oxyde cérique stabilisé par du silicium", ou plus simplement encore "oxyde cérique stabilisé", pour désigner le même produit, objet de la présente invention.

Il est connu que l'oxyde cérique peut être utilisé en tant que catalyseur ou support de catalyseur. On peut citer, par exemple, les travaux de Paul MERIAUDEAU et Coll. relatifs à la synthèse du méthanol à partir de $CO + H_2$ sur des catalyseurs au platine déposé sur de l'oxyde cérique. ( CR. Acad. Sc. Paris t. 297 - Série II - 471 - 1983 ).

Il est également bien connu que l'efficacité d'un catalyseur est généralement d'autant plus grande que la surface de contact entre le catalyseur et les réactifs est grande. Pour ce faire, il est nécessaire que le catalyseur soit maintenu en un état le plus divisé possible, c'est-à-dire que les particules solides qui le composent soient aussi petites et individualisées que possible. Le rôle fondamental du support est donc de maintenir les particules de catalyseur ou cristallites au contact des réactifs, à l'état le plus divisé possible.

Or, lors de l'emploi prolongé d'un support de catalyseur, il se produit une diminution de la surface spécifique qui peut être dûe soit à la coalescence des micropores très fins, soit à la croissance des cristallites. Au cours de cette coalescence, une partie du catalyseur est englobée dans la masse du support et ne peut plus être en contact avec les réactifs.

Il en va ainsi de la plupart des oxydes cériques préparés à ce jour, qui présentent une surface spécifique décroissant rapidement pour des températures de fonctionnement supérieures à 500°C.

Ainsi, R. ALVERO et coll. (J. Chem. Soc. Dalton Trans 1984, 87) ont obtenu à partir de cérinitrate d'ammonium, un oxyde cérique présentant après calcination à une température de 600°C, une surface spécifique de 29 $m^2$/g seulement. On a également décrit dans FR-A 2 559 754 un oxyde cérique présentant une surface spécifique d'au moins 85 ± 5 $m^2$/g mesurée après calcination entre 350 et 450°C et, de préférence, située entre 100 et 130 $m^2$/g après calcination entre 400 et 450°C. Ledit oxyde est préparé par hydrolyse d'une solution aqueuse de nitrate cérique en milieu acide nitrique, puis séparation du précipité obtenu, lavage à l'aide d'un solvant organique, éventuellement séchage, puis calcination. L'oxyde cérique obtenu présente une surface spécifique intéressante lorsqu'il est utilisé dans une gamme de température de calcination allant de 300 à 600°C. Toutefois, on note une chute de la surface spécifique après calcination à une température plus haute, cette surface spécifique étant de 10 $m^2$/g, après calcination à 800°C.

On peut également citer FR-A 2 559 755 qui concerne un oxyde cérique présentant une surface spécifique d'au moins 85 ± 5 $m^2$/g après calcination entre 350 et 500°C, et, de préférence, située entre 150 et 180 $m^2$/g après calcination entre 400 et 450°C. Cet oxyde est obtenu selon un procédé qui consiste à précipiter un sulfate basique cérique en faisant réagir une solution aqueuse de nitrate cérique et une solution aqueuse contenant des ions sulfate, à séparer le précipité obtenu, à le laver à l'aide d'une solution d'ammoniaque, éventuellement à le sécher puis à le calciner à une température variant entre 300 et 500°C. L'oxyde cérique ainsi préparé présente une grande surface spécifique, mais lorsqu'il est soumis à une opération de calcination à 800°C, sa surface spécifique décroît considérablement et se situe vers 10 $m^2$/g.

Dans le but d'améliorer la stabilisation de la surface spécifique des oxydes cériques à des températures élevées, on a déjà proposé dans la demande de brevet EP-A- 207857 au nom de la Demanderesse, de faire appel à divers agents de stabilisation, et plus particulièrement à de l'oxyde de silicium. Cet additif (ou dopant) peut être introduit soit par imprégnation d'un oxyde cérique présynthétisé, soit au cours de la fabrication même de l'oxyde cérique. Dans ce dernier cas, on introduit un précurseur de l'oxyde de silicium dans un sol d'un composé de cérium IV, on précipite ce mélange par ajout d'une base, et le précipité récupéré est ensuite calciné.

Bien que les oxydes cériques stabilisés ainsi obtenus présentent, au niveau de leur surface spécifique, une tenue en température nettement améliorée par rapport à des produits non additivés en silicium, cette dernière apparaît encore comme insuffisante puisque, pour une calcination de 6 heures à 800°C, le meilleur produit obtenu ne présente plus une surface spécifique que de 36 $m^2$/g ; en outre, portés à 1000°C, les produits voient leur surface spécifique chuter à moins de 10 $m^2$/g.

Par ailleurs, il ressort de l'enseignement du document précité que pour obtenir un effet de stabilisation convenable, des quantités de l'ordre de 2,5 % en poids de $SiO_2$ doivent être utilisées ; or, à de telles teneurs, la présence de silicium au

EP 0 547 924 B1

sein de l'oxyde cérique peut devenir gênante pour certaines applications catalytiques (effet poison du silicium).

La présente invention a pour but d'obvier aux inconvénients ci-dessus.

Plus précisément, l'invention vise à proposer des oxydes cériques contenant du silicium à titre de stabilisant, qui présentent l'avantage de conserver des surfaces spécifiques importantes même après des calcinations à des températures élevées, et plus particulièrement d'au moins 800°C.

Elle vise également à proposer des oxydes cériques tels que ci-dessus, stabilisés par des quantités minimales de silicium.

Elle vise enfin à proposer un procédé de synthèse permettant d'accéder aux nouveaux oxydes cériques selon l'invention.

A cet effet, il est maintenant proposé une nouvelle composition à base d'oxyde cérique contenant du silicium à titre d'agent de stabilisation, ladite composition étant caractérisée par le fait qu'elle présente une surface spécifique d'au moins 40 m$^2$/g, mesurée après calcination pendant 6 heures à 800°C et d'au moins 20 m$^2$/g, mesurée après calcination à 1000°C pendant 6 heures.

Une des caractéristiques essentielles de l'oxyde cérique stabilisé selon l'invention est donc qu'il présente une très grande surface spécifique après une calcination à température élevée.

Il présente ainsi de préférence une surface spécifique d'au moins 50 m$^2$/g, et encore plus préférentiellement d'au moins 60 m$^2$/g, mesurée après calcination à une température de 800°C pendant 6 heures.

Les oxydes cériques selon l'invention les plus avantageux présentent une surface spécifique d'au moins 70 m$^2$/g, et plus particulièrement d'au moins 80 m$^2$/g, mesurée après calcination à 800°C pendant 6 heures ; cette dernière n'excède néanmoins généralement pas 100 m$^2$/g.

En outre, lorsque les oxydes cériques selon l'invention sont soumis à des températures de calcination encore plus élevées, par exemple au cours de leur utilisation dans le domaine de la catalyse, ils présentent la caractéristique remarquable de conserver une surface spécifique encore très importante ; ainsi, portés à 1000°C pendant 6 heures, les oxydes cériques selon l'invention présentent encore une surface spécifique d'au moins 20 m$^2$/g, généralement d'au moins 30 m$^2$/g, et de préférence d'au moins 40 m$^2$/g ; cette dernière peut même dépasser 50 m$^2$/g, sans toutefois généralement dépasser 100 m$^2$/g.

Selon une autre caractéristique des compositions à base d'oxyde cérique selon l'invention, la teneur en silicium, exprimé en SiO$_2$, n'excède avantageusement pas 2 % en poids par rapport à la quantité d'oxyde cérique.

De préférence, les compositions selon l'invention contiennent moins de 1 % en poids de silicium, exprimé sous forme SiO$_2$, par rapport à la quantité d'oxyde cérique.

Des rapports pondéraux SiO$_2$/CeO$_2$ compris entre environ 0,001 et 0,01 et plus particulièrement entre 0,003 et 0,01, conviennent généralement bien.

L'analyse par diffraction X montre que l'oxyde cérique stabilisé de l'invention présente, après calcination à 800°C, une phase cristalline de type CeO$_2$ ayant un taux de cristallisation élevé, supérieur à 90 %.

L'analyse des spectres de diffraction X montre également que ce produit, toujours après calcination à 800°C, se présente sous la forme de cristallites de faibles dimensions, la taille de ces derniers variant généralement entre 100 Å et 200 Å, selon la teneur en silicium. Après calcination à 1000°C, cette taille reste encore comprise entre 130 Å et 450 Å, toujours selon la teneur en silicium.

Cette très faible taille des cristallites, ainsi que la très faible croissance de ces derniers avec la température, constituent des avantages particulièrement importants pour des applications en catalyse. Elles permettent en effet d'une part d'éviter l'encapsulation, aux hautes températures, des métaux précieux, tels que platine, qui imprègnent les cristallites d'oxyde cérique, et d'autre part d'améliorer la capacité de stockage d'oxygène de cet oxyde. L'exemple donné ci-après montrera l'exellent comportement en température de l'oxyde cérique selon l'invention lorsqu'il est noyé dans une matrice alumine, comme cela est le cas dans les compositions type wash-coat.

Le procédé de synthèse des compositions à base d'oxyde cérique selon l'invention va maintenant être développé. Ce procédé est caractérisé par le fait qu'il comprend les étapes suivantes :

a) on met en suspension dans une solution aqueuse contenant une base décomposable et un composé du silicium, un hydroxyde cérique répondant à la formule générale (I)

$$Ce\,(M)_x\,(OH)_y\,(NO_3)_z \qquad\qquad (I)$$

dans laquelle :

- M représente un métal alcalin ou un radical ammonium quaternaire,

- x est compris entre 0,01 et 0,2,

- y est tel que y = 4 - z + x ,

3

-   z est compris entre 0,4 et 0,7

b) on chauffe ladite suspension dans une enceinte close jusqu'à une température et une pression inférieures respectivement à la température critique et à la pression critique dudit milieu (étape appelée également autoclavage)

c) on refroidit le milieu réactionnel et on le ramène à la pression atmosphérique,

d) on sépare l'hydroxyde cérique ainsi traité,

e) puis on le calcine.

La Demanderesse a découvert qu'un oxyde cérique stabilisé par du silicium présentant une très grande surface spécifique même à des températures très élevées, pouvait être obtenu en soumettant un hydroxyde cérique (ou hydrate d'oxyde cérique) particulier à un traitement d'autoclavage effectué en milieu basique et en présence d'un composé du silicium.

Intervient donc dans le procédé de l'invention, un hydroxyde cérique répondant à la formule (I) ci-dessus. Celui-ci fait l'objet de la demande de brevet EP-A 0 208 580, dont l'enseignement est ici totalement inclus à titre de référence. Il s'agit plus précisément d'un hydroxynitrate de cérium IV qui possède la propriété de se peptiser, c'est-à-dire de donner un sol par simple mise en dispersion dans l'eau.

L'analyse thermique différentielle dudit produit révèle lors de sa calcination sous atmosphère d'air un pic exothermique de 250°C à 300°C pour une montée en température de 300°C par heure.

Il présente une phase cristalline type $CeO_2$ ayant un paramètre de maille de 0,542 nm à 0,544 nm et un taux de cristallisation variant de 30 à 70 % et, de préférence, de 40 à 60 %.

L'hydroxyde cérique répondant à la formule (I) avec les caractéristiques précitées qui est mis en oeuvre selon l'invention peut être préparé selon un procédé tel que décrit dans EP-A 0 208 580 qui consiste à préparer une dispersion colloïdale d'un composé de cérium IV en faisant réagir une solution aqueuse d'un sel de cérium IV et une base de telle sorte que l'on obtienne un taux de neutralisation inférieur ou égal à 3,0 ; à soumettre ladite dispersion à un traitement thermique puis à séparer le précipité formé.

Synthèse de l'hydroxyde cérique de formule (I)

Dans la première étape du procédé décrit dans EP-A 0 208 580, on prépare une dispersion colloïdale d'un composé de cérium IV. Dans celle-ci, le cérium IV se trouve simultanément sous forme d'ions et de colloïdes, ce qui signifie qu'il y a présence de particules de dimensions colloïdales. On désigne par "dispersion colloïdale", ce mélange ions-colloïdes.

On réalise la préparation de ladite dispersion colloïdale en faisant réagir une solution aqueuse d'un sel de cérium IV avec une base dans les conditions définies ci-après.

La solution de sel de cérium IV peut être une solution aqueuse de nitrate cérique ou une solution aqueuse de nitrate céri-ammoniacal. Ladite solution peut contenir sans inconvénient du cérium à l'état céreux mais il est souhaitable qu'elle contienne au moins 85 % de cérium IV.

La concentration de la solution de sel de cérium n'est pas un facteur critique et peut varier entre 0,1 et 2 moles/litre, de préférence entre 1 et 2 moles/litre : ladite concentration étant exprimée en cérium IV.

La solution aqueuse de sel de cérium IV présente généralement une certaine acidité initiale et peut avoir une normalité variant entre 0,1 et 4 N et, de préférence, entre 0,1 N et 1 N.

La solution de nitrate cérique obtenue selon le procédé d'oxydation électrolytique d'une solution de nitrate céreux et qui est décrite dans FR-A 2 570 087 constitue une matière première de choix.

Pour ce qui est de la base mise en oeuvre, on peut faire appel à une solution aqueuse d'ammoniaque, d'hydroxyde de sodium ou de potassium. On peut également faire appel à l'ammoniac gazeux. On met en oeuvre, de préférence, une solution d'ammoniaque.

La normalité de la solution basique n'est pas un facteur critique et peut varier entre 0,1 N et 11 N, de préférence, entre 0,1 N et 5 N.

La proportion entre la solution basique et la solution de sel de cérium IV doit être telle que le taux de neutralisation est supérieur ou égal à 0,01 et inférieur ou égal à 3,0.

On définit la taux de neutralisation r par l'équation suivante :

$$r = \frac{n3 - n2}{n1}$$

dans laquelle :

- n1 représente le nombre de moles de Ce IV présentes dans la dispersion colloïdale finale

- n2 représente le nombre de moles $OH^-$ nécessaires pour neutraliser l'acidité apportée par la solution aqueuse de sel de cérium IV

- n3 représente le nombre total de moles $OH^-$ apportées par l'addition de la base.

Le taux de neutralisation reflète l'état colloïdal du cérium IV :

- avec r = 4, le cérium IV précipite sous forme gélatineuse

- avec r = 0, le cérium IV est sous forme ionique

- avec 0 < r < 4, le cérium IV est sous forme ionique et/ou colloïdale.

Pour une concentration finale en cérium IV inférieure à 0,5 mole/litre, on choisit un taux de neutralisation supérieur ou égal à 0,01 et inférieur ou égal à 2,5 et pour une concentration supérieure à 0,5 mole/litre, on le choisit, de préférence, supérieur ou égal à 0,01 et inférieur ou égal à 2,0.
D'une manière pratique, pour obtenir un taux de neutralisation désiré r choisi dans l'intervalle précité pour une concentration donnée en Ce IV dans la dispersion colloïdale finale, on ajuste la concentration de la solution basique de telle sorte qu'elle satisfasse à l'équation suivante :

$$[OH^-] = \frac{(n_1 \cdot r + n_2)\,[Ce\ IV]_f\,[Ce\ IV]_i}{n_1\,([Ce\ IV]_i - [Ce\ IV]_f)}$$

- $[OH^-]$ représente la concentration en moles/litre de la solution basique

- $[Ce\ IV]_f$ représente la concentration en Ce IV en moles/litre de la dispersion colloïdale finale

- $[Ce\ IV]_i$ représente la concentration en Ce IV en moles/litre de la solution aqueuse de sel de cérium IV

- $n_1$ et $n_2$ sont déterminés par dosage classique de la solution aqueuse du sel de cérium IV :

  . $n_1$ par titrage potentiomètrique à l'aide d'une solution d'un sel ferreux
  . $n_2$ par titrage acido-basique après complexation du cérium à l'aide d'ions oxalate.

La réaction entre la solution aqueuse de sel de cérium IV et la base mise en oeuvre dans les quantités précédemment définies est effectuée à une température qui peut se situer entre 0°C et 60°C mais, de préférence, à la température ambiante, soit le plus souvent 15 à 25°C.
On peut réaliser le mélange des réactifs précités selon plusieurs variantes. Par exemple, on peut faire le mélange simultané, sous agitation de la solution aqueuse du sel de cérium IV et de la solution basique ou bien additionner en continu ou en une seule fois, la base dans la solution aqueuse de sel de cérium IV ou inversement.
La durée du mélange peut varier entre 0,1 seconde et 30 heures et est choisie, de préférence, entre 2 heures et 6 heures.
Conformément au procédé décrit dans EP-A 0 208 580, on obtient alors une dispersion colloïdale d'un composé de cérium IV en milieu aqueux.
Elle présente une concentration en cérium IV qui peut varier entre 0,1 et 2 moles/litre, de préférence de 0,3 à 0,8 mole/litre. Le taux de cérium IV sous forme colloïdale est compris généralement entre 10 et 90 % du cérium IV mis en oeuvre.
Le diamètre hydrodynamique moyen des colloïdes déterminé par diffusion quasi-élastique de la lumière selon la méthode décrite par Michael L. Mc CONNELL dans Analytical Chemistry 53, n°8, 1007 A (1981), peut varier entre 4 et 30 nm.
Selon le procédé décrit dans EP-A 0 208 580, la dispersion ainsi obtenue est ensuite soumise à un traitement thermique à une température comprise entre 80°C et 300°C, de préférence entre 90°C et 110°C, et encore plus préférentiellement, à la température de reflux du mélange réactionnel.
Les conditions du traitement thermique ne sont pas critiques : il peut être effectué sous pression atmosphérique ou sous pression telle que par exemple la pression de vapeur d'eau saturante correspondant à la température du traitement thermique. On conduit le traitement soit sous atmosphère d'air ou sous atmosphère de gaz inerte, de préférence l'azote.

La durée de ce traitement peut varier dans de larges limites entre 2 et 48 heures, de préférence entre 2 heures et 24 heures.

En fin d'opération, on récupère un précipité solide qui est séparé par les techniques classiques de séparation : filtration, décantation, essorage et centrifugation.

Il est possible de soumettre le produit obtenu à une opération de séchage qui peut être conduite à une température comprise entre 15°C et 120°C, de préférence à température ambiante et qui peut être effectuée à l'air ou sous pression réduite, par exemple, entre 133,322 Pa et 13332,2 Pa.

Synthèse de l'oxyde cérique stabilisée selon l'invention

D'une manière préférentielle, on met en oeuvre dans le procédé de l'invention, l'hydroxynitrate de cérium IV de formule (I) obtenu directement après la séparation ci-dessus, sans le sécher.

Conformément au procédé de l'invention, on soumet ledit produit préparé par hydrolyse d'un sel nitrate de cérium IV à un traitement d'autoclavage particulier, avant d'effectuer l'opération de calcination.

A cet effet, on met en oeuvre l'hydroxyde cérique sous forme de suspension dans une solution aqueuse contenant une base décomposable et un sel de silicium, cette solution constituant ainsi le milieu liquide d'autoclavage.

On notera que la manière d'obtenir la suspension à autoclaver, et en particulier la manière d'introduire les divers réactifs destinés à la constituer (hydroxyde cérique, base décomposable, composé du silicium, eau), est tout à fait indifférente.

On entend par base décomposable, un composé présentant un $pk_b$ inférieur à 7 et susceptible de se décomposer dans les conditions de calcination de l'invention.

A titre illustratif de ces dernières, on peut citer l'ammoniaque, l'urée, l'acétate d'ammonium, l'hydrogénocarbonate d'ammonium, le carbonate d'ammonium, ou une amine primaire, secondaire, tertiaire, comme, par exemple, la méthylamine, l'éthylamine, la propylamine, la n-butylamine, la sec-butylamine, la n-pentylamine, l'amino-2 pentane, l'amino-2 méthyl-2 butane, l'amino-1 méthyl-3 butane, le diamino-1,2 éthane, le diamino-1,2 propane, le diamino-1,3 propane, le diamino-1,4 butane, le diamino-1,5 pentane, le diamino-1,6 hexane, la diméthylamine, la diéthylamine, la triméthylamine, la triéthylamine ou une amine quaternaire comme, par exemple, un hydroxyde de tétraalkylammonium ayant de préférence des radicaux alkyle contenant de 1 à 4 atomes de carbone et l'on fait appel plus particulièrement à l'hydroxyde de tétraméthylammonium ou l'hydroxyde de tétraéthylammonium.

On peut également mettre en oeuvre un mélange de bases.

On fait appel, de préférence, à une solution d'ammoniaque, d'hydroxyde de tétraalkylammonium ou leurs mélanges.

La concentration de la base dans le milieu liquide d'autoclavage n'est pas un facteur critique selon l'invention. Elle peut varier dans de larges limites, par exemple, entre 0,1 N et 11 N, mais il est préférable de faire appel à une solution dont la concentration varie entre 1 et 10 N.

Dans le milieu liquide, la concentration de l'hydroxyde cérique, exprimée en $CeO_2$, varie de préférence entre 0,1 et 3,0 moles/litre et, encore plus préférentiellement, entre 0,2 et 1,0 mole/litre.

Concernant les composés du silicium à introduire dans le milieu de réaction, on peut utiliser soit des sels de silicium décomposables en oxyde par chauffage, soit directement de l'oxyde de silicium submicronique, comme par exemple celui présent dans les sols de silice type LUDOX®.

A titre de sels précurseurs d'oxyde de silicium, on peut faire appel à des siliconates, ou bien encore à des silicates d'ammonium quaternaire. Parmi les siliconates, on peut plus particulièrement citer les alkylsiliconates d'alcalins, comme par exemple le méthylsiliconate de potassium, produit commercialisé notamment par la Société RHONE-POULENC sous le nom de marque RHODORSIL®.

L'ion ammonium quaternaire des silicates qui peuvent être mis en oeuvre selon l'invention présente des radicaux hydrocarbonés ayant de préférence 1 à 3 atomes de carbones.

On met ainsi de préférence en oeuvre au moins un silicate choisi parmi : le silicate de tétraméthylammonium, le silicate de tétraéthylammonium, le silicate de tétrapropylammonium, le silicate de tétrahydroxyéthylammonium (ou silicate de tétraéthanolammonium). Le silicate de tétraméthylammonium est notamment décrit dans Y.U.I. Smolin "Structure of water soluble silicates with complex cations" dans "Soluble Silicates "Edition 1982. Le silicate de tétraéthanolammonium est notamment décrit dans Helmut H. Weldes, K. Robert Lange "Properties of soluble silicates" dans "Industrial and Engineering Chemistry" vol. 61, N4, Avril 1969, et dans le brevet US 3 239 521. Les références citées ci-dessus décrivent également d'autres silicates d'ammonium quaternaires solubles dans l'eau qui peuvent être utilisés selon l'invention.

La quantité de composé(s) du silicium mise en oeuvre est telle que l'on ait les pourcentages pondéraux désirés dans la composition finale.

Comme cela découle de ce qui a été indiqué précédemment dans la description, les quantités de composés du silicium à mettre en oeuvre restent généralement faibles, de manière à obtenir un oxyde cérique calciné et stabilisé présentant une teneur en silicium n'excédant avantageusement pas 2 % en poids, et encore plus préférentiellement 1 % en poids.

La deuxième étape du procédé selon l'invention consiste en une étape d'autoclavage.

L'opération d'autoclavage est effectuée à une température située entre la température de reflux et la température critique du mélange réactionnel. On choisit de préférence une température comprise entre 100°C et 350°C, et encore plus préférentiellement, entre 150°C et 350°C. La montée en température s'effectue à une vitesse qui n'est pas critique. On atteint la température réactionnelle en chauffant par exemple entre 30 minutes et 4 heures.

On peut conduire le procédé de l'invention en introduisant l'hydroxyde cérique en suspension dans le milieu liquide dans une enceinte close, la pression ne résulte donc que du chauffage du mélange réactionnel.

Dans les conditions de températures données ci-dessus, et en milieu aqueux, on peut préciser, à titre illustratif, que la pression varie entre 1 Bar ($10^5$ Pa) et 165 Bar ($165.10^5$ Pa) de préférence entre 5 Bar ($5.10^5$ Pa) et 165 Bar ($165.10^5$ Pa).

Il est également possible d'exercer une pression extérieure qui s'ajoute alors à celle consécutive au chauffage.

La durée de l'opération d'autoclavage n'est pas critique. Elle peut varier entre 30 minutes et 6 heures.

A la fin de celle-ci, on laisse refroidir à l'inertie du système et l'on ramène le système à la pression atmosphérique.

On sépare le produit en suspension dans le milieu liquide selon les techniques classiques de séparation solide-liquide telles que décantation, essorage, filtration et/ou centrifugation.

Le produit recueilli peut être éventuellement soumis à un lavage, de préférence à l'eau, et/ou un séchage dans les conditions telles que précédemment décrites.

L'invention a également pour objet l'hydroxyde cérique ainsi recueilli, avant calcination.

Selon une dernière étape du procédé de l'invention, on calcine le produit obtenu à une température comprise entre 300°C et 1000°C.

Cette température est déterminée en fonction de la surface spécifique souhaitée pour l'application catalytique subséquente, en tenant compte du fait que la surface spécifique est d'autant plus faible que la température de calcination est plus élevée.

La durée de la calcination peut varier dans de larges limites entre 30 minutes et 10 heures et, de préférence, entre 2 et 6 heures.

Selon une variante du procédé de l'invention, l'hydroxyde cérique en suspension dans un milieu liquide est soumis à un premier traitement thermique en enceinte close jusqu'à une température et une pression inférieure respectivement à la température critique et à la pression critique du milieu liquide, en d'autres termes à un premier autoclavage. Avantageusement le milieu liquide est de l'eau.

La suspension autoclavée obtenue est ensuite soumise à un second autoclavage tel que décrit ci-dessus, c'est à dire avec un milieu liquide contenant une base décomposable et un composé du silicium.

La suspension après le premier autoclavage peut être concentrée ou diluée, ou l'hydroxyde cérique ainsi autoclavé peut être séparé et récupéré par exemple par filtration avant d'être redispersé dans le second milieu d'autoclavage. Le précipité ainsi récupéré peut être lavé, séché avant sa redispersion.

Les conditions de ce premier autoclavage sont semblables à celles décrites pour l'autoclavage en milieu basique. Toutefois,la concentration en hydroxyde cérique, exprimée en $CeO_2$, peut être plus élevée et par exemple comprise entre 0,1 et 4 moles/l.

L'oxyde cérique selon l'invention présente une grande surface spécifique après calcination à la fois à basse et à haute température si bien qu'il convient tout-à-fait bien dans le domaine de la catalyse, comme catalyseur ou comme support catalytique, notamment dans les wash-coats à matrice alumine.

Il est particulièrement bien adapté pour être employé comme support catalytique dans les réactions de traitement des gaz d'échappement des moteurs à combustion interne.

L'exemple qui suit illustre le nouvel oxyde cérique stabilisé de l'invention, et son procédé d'obtention. Il est donné à titre illustratif, sans caractère limitatif.

Exemple :

1. Synthèse de l'hydroxyde cérique

Dans un ballon tricol de 6 litres muni d'un thermomètre, d'un dispositif d'agitation, d'un système d'introduction de réactif (pompe doseuse), on introduit à température ambiante :

- 1000 cm$^3$ d'une solution de nitrate cérique contenant 1,24 moles/litre de cérium IV et ayant une acidité libre de 0,332 N.

- 2555 cm$^3$ d'une solution d'ammoniaque 0,3726 N.

L'addition de la solution d'ammoniaque, à température ambiante, dans la solution de nitrate cérique est réalisée à

raison de 1664 cm$^3$/heure.

On obtient une dispersion colloïlade aqueuse d'un composé de cérium IV à une concentration exprimée en CeO$_2$ égale à 60 g/l et à un taux de neutralisation r = 0,5.

Dans une deuxième étape, on soumet la dispersion obtenue à un traitement thermique, dans un réacteur double enveloppe équipé d'un réfrigérant et d'un système d'agitation, à 100°C pendant 4 heures.

Après filtration du précipité, on recueille 287 g de produit jaune.

L'analyse chimique du produit obtenu montre la composition chimique suivante :

- perte au feu                  = 20 %

- CeO$_2$                    = 80 %

- rapport molaire NO$_3^-$/Ce$^{IV}$      = 0,49

- rapport molaire NH$_4^+$/Ce$^{IV}$      = 0,025

2. <u>Autoclavage de l'hydroxyde cérique</u>

On ajoute aux 287 g du produit préparé précédemment, une quantité d'eau telle que l'on obtienne une suspension aqueuse de 650 ml.

A cette suspension, sont ensuite introduits 500 ml d'une solution aqueuse qui a été obtenue en mélangeant :

(i) 100 ml d'une solution d'ammoniaque 11,4 N,

(ii) du méthylsiliconate de potassium en une quantité nécessaire pour obtenir la quantité désirée en SiO$_2$ dans le produit calciné

(iii) le complément nécessaire en eau.

Après mélange, la suspension résultante est introduite dans un autoclave de 2 litres.

L'ensemble est alors porté à 200°C, soit environ 16 bar (16. 10$^5$ Pa), pendant 1 heure, au moyen de chauffage approprié.

A la fin de ce traitement, on filtre le précipité sur Büchner.

On soumet ensuite trois fractions de produit récupéré à une opération de calcination, respectivement dans les conditions suivantes : 3 heures à 350°C, 6 heures à 800°C ou 6 heures à 1000°C.

On détermine ensuite selon les méthodes définies dans la description, la surface spécifique de l'oxyde cérique obtenu (S.S.), pour chacune de ces températures.

On détermine également la taille des cristallites perpendiculaires aux directions 111 par diffraction aux rayons X (dRX$_{111}$).

On a consigné dans le tableau ci-dessous les résultats obtenus pour cinq séries d'essais (essais 1 à 5) dans lesquels on a fait simplement varier la teneur en silicium dans le produit final, et ceci en jouant sur la quantité de méthylsiliconate de potassium initialement introduite dans la suspension à autoclaver.

| ESSAI | SiO$_2$/CeO$_2$ (% en poids | S.S$_{350°C}$ (m$^2$/g) | S.S800°C (m$^2$/g) | S.S1000°C (m$^2$/g) | dRX$_{111}$ (Å) à 800°C | dRX$_{111}$ (Å) à 1000°C |
|---|---|---|---|---|---|---|
| 1 | 0,32 | 275 | 40 | 22 | 200 | 350 |
| 2 | 0,54 | 195 | 63 | 40 | 130 | 200 |
| 3 | 0,94 | 140 | 76 | 52 | 110 | 170 |
| 4 | 1,56 | 120 | 85 | 32 | 100 | 240 |
| 5 | 1,99 | 115 | 85 | 34 | 100 | 250 |

On constate que l'oxyde cérique stabilisé par du silicium conforme l'invention, présente une surface spécifique très élevée, mesurée a rès calcination à 800°C, et que cette surface reste encore élevée même prè une calcination à 1000°C.

Par comparaison, les produits obtenus selon l'enseignement du document EP-A-207857, pourtant stabilisés avec des teneurs plus élevées en silicium, présentent d'une part une surface spécifique à 800°C inférieure ou égale à 36 $m^2$/g et, d'autre part, une chute très importante de celle-ci après calcination à 1000°C, la surface spécifique tombant alors à moins de 10 $m^2$/g.

3- <u>Comportement de l'oxyde cérique dans une matrice alumine</u>

Le test ci-dessous vise à évaluer les oxydes cériques dopés selon l'invention dans une matrice alumine, et plus particulièrement à montrer la très faible croissance de la taille des cristallites au sein de cette dernière aux hautes températures.

On prépare 3 litres d'un slurry aqueux, à 30 % d'extrait sec, de composition pondérale suivante (par rapport à l'extrait sec) :

- 80 % d'un mélange d'alumine constitué, en poids, de 25 % d'un gel d'alumine (VERSAL 250, produit commercial de la société KAISER) et de 75 % du même gel d'alumine mais calciné ( 6 heures à 700°C )

- 20 % d'oxyde cérique dopé en silicium tel que préparé à l'essai 2 ci-avant, et calciné à 350°C ( $SiO_2/CeO_2$ = 0,54 % )

On rajoute à ce slurry 1 % en poids d'acide nitrique de manière à péptiser l'alumine.

On agite vigoureusement le mélange, puis on procède à un broyage humide (broyeur NECHST) pour ramener la taille moyenne des particules à environ 5 $\mu$m.

Apès broyage, on sèche puis on calcine sous air le produit. Afin d'évaluer au mieux la stabilité thermique du $CeO_2$ dans l'alumine, la température et la durée de calcination sont fixées, selon le présent test, à 1000°C pendant 6 heures.

Après calcination, on mesure alors la taille des cristallites de l'oxyde de cérium dans le mélange, et ceci par analyse du spectre de diffraction X (formule DEBYE-SCHERER).

Les résultats indiquent que cette taille est inférieure à 200 Å.

## Revendications

1. Composition à base d'oxyde cérique contenant du silicium comme agent de stabilisation, caractérisée par le fait qu'elle présente une surface spécifique d'au moins 40 $m^2$/g, mesurée après calcination à 800°C pendant 6 heures et d'au moins 20 $m^2$/g, mesurée après calcination à 1000°C pendant 6 heures.

2. Composition selon la revendication 1, caractérisée en ce que ladite surface spécifique est d'au moins 50 $m^2$/g, et de préférence d'au moins 60 $m^2$/g , mesurée après calcination à 800°C.

3. Composition selon la revendication 1, caractérisée en ce que ladite surface spécifique est d'au moins 70 $m^2$/g, et de préférence d'au moins 80 $m^2$/g, mesurée après calcination à 600°C.

4. Composition selon l'une des revendications 1 à 3, caractérisée en ce qu'après calcination à 800°C pendant 6 heures, elle est constituée de cristallites dont la taille est comprise entre 100 et 200 Å.

5. Composition selon l'une des revendications précédentes, caractérisée en ce que ladite surface spécifique, mesurée après calcination à 1000°C est d'au moins 30 $m^2$/g, de préférence d'au moins 40 $m^2$/g et encore plus préférentiellement d'au moins 50 $m^2$/g.

6. Composition selon l'une des revendications précédentes, caractérisée en ce qu'après calcination à 1000°C pendant 6 heures, elle est constituée de cristallites dont la taille est comprise entre 130 et 450 Å.

7. Composition selon l'une quelconque des revendications précédentes, caractérisée en ce qu'elle contient une quantité de silicium, exprimée sous forme de $SiO_2$, inférieure à 2% du poids d'oxyde cérique.

8. Composition selon la revendication 7, caractérisée en ce que ladite quantité de silicium est inférieure à 1% du poids de l'oxyde cérique.

9. Composition selon la revendication 8, caractérisée en ce que ladite quantité de silicium est comprise entre environ 0,1% et 1% du poids de l'oxyde cérique.

**10.** Procédé de préparation d'une composition telle que décrite dans l'une quelconque des revendications 1 à 9, caractérisé par le fait qu'il comprend les étapes suivantes :

a) on met en suspension dans une solution aqueuse contenant une base décomposable et un composé du silicium, un hydroxyde cérique répondant à la formule générale (I) suivante :

$$Ce\,(M)_x(OH)_y(NO_3)_z \qquad\qquad (I)$$

dans laquelle :

- M représente un métal alcalin ou un radical ammonium quaternaire,
- x est compris entre 0,01 et 0,2,
- y est tel que $y = 4 - z + x$,
- z est compris entre 0,4 et 0,7.

b) on chauffe ladite suspension dans une enceinte close jusqu'à une température et une pression inférieures respectivement à la température critique et à la pression critique dudit milieu,
c) on refroidit le milieu réactionnel et on le ramène à la pression atmosphérique,
d) on sépare l'hydroxyde cérique ainsi traité,
e) puis on le calcine.

**11.** Procédé selon la revendication 10, caractérisé en ce que ledit hydroxyde cérique de formule (I) est obtenu selon un procédé qui consiste à préparer une dispersion colloïdale d'un composé de cérium IV en faisant réagir une solution aqueuse d'un sel de cérium IV et une base de telle sorte que l'on obtienne un taux de neutralisation inférieur ou égal à 3,0; à soumettre ladite dispersion à un traitement thermique; puis à séparer le précipité formé.

**12.** Procédé selon la revendication 11, caractérisé par le fait que l'on prépare la dispersion colloïdale d'un composé de cérium IV en faisant réagir une solution aqueuse d'un sel de cérium IV et une base de telle sorte que l'on obtienne un taux de neutralisation supérieur ou égal à 0,01 et inférieur ou égal à 3,0.

**13.** Procédé selon la revendication 11 ou 12, caractérisé par le fait que la solution de sel de cérium IV est une solution aqueuse de nitrate cérique ou une solution aqueuse de nitrate céri-ammoniacal.

**14.** Procédé selon la revendication 13, caractérisé par le fait que la solution aqueuse de sel de cérium IV est une solution provenant de l'oxydation électrochimique d'une solution de nitrate céreux.

**15.** Procédé selon l'une des revendications 11 à 14, caractérisé par le fait que la concentration de la solution de sel de cérium exprimée en cérium IV est comprise entre 0,1 et 2 moles par litre.

**16.** Procédé selon l'une des revendications 11 à 15, caractérisé par le fait que la base est une solution aqueuse d'ammoniaque.

**17.** Procédé selon l'une des revendications 11 à 16, caractérisé par le fait que la normalité de la solution basique est comprise entre 0,1 N et 5 N.

**18.** Procédé selon l'une des revendications 11 à 17, caractérisé pu le fait que l'on traite thermiquement la dispersion colloïdale du composé du cérium IV à une température comprise entre 80°C et 300°C.

**19.** Procédé selon la revendication 18, caractérisé par le fait que la température du traitement thermique est comprise entre 90°C et 110°C.

**20.** Procédé selon l'une des revendications 10 à 19, caractérisé en ce que préalablement à la mise en suspension d'hydroxyde cérique, ce dernier est mis en suspension dans l'eau, ladite suspension aqueuse étant chauffée dans une enceinte close jusqu'à une température et une pression inférieures respectivement à la température critique et à la pression critique du milieu.

**21.** Procédé selon l'une des revendications 10 à 20, caractérisé par le fait que la base décomposable est l'ammoniaque, l'urée, l'hydrogénocarbonate d'ammonium, le carbonate d'ammonium, une amine primaire, secondaire, tertiaire ou quaternaire ou leurs mélanges.

22. Procédé selon la revendication 21, caractérisé par le fait que la base décomposable est l'ammoniaque, un hydroxyde de tétralkylammonium ou leurs mélanges.

23. Procédé selon l'une des revendications 10 à 22, caractérisé par le fait que la concentration de base décomposable varie entre 1 et 10 N.

24. Procédé selon l'une des revendications 10 à 23, caractérisé par le fait que le composé de silicium est choisi, seul ou en mélange, parmi les sols de silice, les siliconates, et les silicates d'ammonium quaternaire.

25. Procédé selon l'une des revendications 10 à 24, caractérisé en ce que la concentration de l'hydroxyde cérique dans la suspension à autoclaver, varie entre 0,1 et 3 moles/litre, exprimée en $CeO_2$.

26. Procédé selon la revendication 25, caractérisé en ce que ladite concentration est comprise entre 0,2 et 1,0 mole/litre.

27. Procédé selon l'une des revendications 10 à 26, caractérisé par le fait que la température d'autoclavage varie entre 100 et 350°C.

28. Procédé selon la revendication 27, caractérisé par le fait que ladite température est comprise entre 150 et 350°C.

29. Procédé selon l'une des revendications 10 à 28, caractérisé par le fait que la pression d'autoclavage varie entre 1 bar ($10^5$ Pa) et 165 bars ($165.10^5$ Pa).

30. Procédé selon la revendication 29, caractérisé par le fait que ladite pression est comprise entre 5 bars ($5.10^5$ Pa) et 165 bars ($165.10^5$ Pa).

31. Procédé selon l'une des revendications 10 à 30, caractérisé par le fait que la température de calcination est comprise entre 300 et 1000°C.

32. Composition à base d'hydroxyde cérique, précurseur de la composition à base d'oxyde cérique définie à l'une des revendications 1 à 9, caractérisée en ce qu'elle est obtenue selon un procédé tel que défini à l'une quelconque des revendications 10 à 30, mais sans la mise en oeuvre de l'étape (e) de calcination.

33. Mélange à base d'alumine et d'oxyde cérique et/ou d'hydroxyde cérique, caractérisé en ce que ledit oxyde cérique est une composition telle que définie à l'une des revendications 1 à 9, et ledit hydroxyde cérique une composition telle que définie à la revendication 32.

34. Mélange selon la revendication 33, caractérisé en ce que, après calcination à 1000°C pendant 6 heures, la taille des cristallites d'oxyde cérique contenues dans celui-ci est inférieure à 200 Å.

## Claims

1. Composition based on ceric oxide containing silicon as stabilizing agent, characterized by the fact that it has a specific surface of at least 40 $m^2$/g, measured after calcination at 800°C for 6 hours and a specific surface of at least 20 $m^2$/g, measured after calcination at 1000°C for 6 hours.

2. Composition according to Claim 1, characterized in that the said specific surface is at least 50 $m^2$/g, and preferably at least 60 $m^2$/g, measured after calcination at 800°C.

3. Composition according to Claim 1, characterized in that the said specific surface is at least 70 $m^2$/g, and preferably at least 80 $m^2$/g, measured after calcination at 600°C.

4. Composition according to one of Claims 1 to 3, characterized in that after calcination at 800°C for 6 hours it consists of crystallites whose size lies between 100 and 200 Å.

5. Composition according to any one of the preceding claims, characterized in that the said specific surface, measured after calcination at 1000°C, is at least 30 $m^2$/g, preferably at least 40 $m^2$/g and even more preferably at least 50 $m^2$/g.

6. Composition according to one of the preceding claims, characterized in that after calcination at 1000°C for 6 hours it consists of crystallites whose size lies between 130 and 450 Å.

7. Composition according to any one of the preceding claims, characterized in that it contains a quantity of silicon, expressed as $SiO_2$, which is less than 2 % of the weight of ceric oxide.

8. Composition according to Claim 7, characterized in that the said quantity of silicon is less than 1 % of the weight of the ceric oxide.

9. Composition according to Claim 8, characterized in that the said quantity of silicon lies between approximately 0.1 % and 1 % of the weight of the ceric oxide.

10. Process for preparing a composition as described in any one of Claims 1 to 9, characterized by the fact that it comprises the following stages:

   a) a ceric hydroxide corresponding to the following general formula (I):

   $$Ce\,(M)_x(OH)_y(NO_3)_z \hspace{4cm} (I)$$

   in which:

   - M represents a metal or a quaternary ammonium radical,
   - x lies between 0.01 and 0.2,
   - y is such that $y = 4 - z + x$,
   - z lies between 0.4 and 0.7

   is suspended in an aqueous solution containing a decomposable base and a silicon compound,
   b) the said suspension is heated in a closed vessel to a temperature and to a pressure lower than the critical temperature and the critical pressure respectively of the said mixture,
   c) the reaction mixture is cooled and returned to atmospheric pressure,
   d) the ceric hydroxide thus treated is separated off,
   e) it is then calcined.

11. Process according to Claim 10, characterized by the fact that the said ceric hydroxide of formula (I) is obtained according to a process which consists in preparing a colloidal dispersion of a cerium IV compound by reacting an aqueous solution of a cerium IV salt and a base, so as to obtain a neutralization rate lower than or equal to 3.0; in subjecting the said dispersion to a thermal treatment; and then in separating the resulting precipitate.

12. Process according to Claim 11, characterized by the fact that the colloidal dispersion of a cerium IV compound is prepared by reacting an aqueous solution of a cerium IV salt and a base, so as to obtain a neutralization rate that is greater than or equal to 0.01 and less than or equal to 3.0.

13. Process according to Claim 11 or 12, characterized by the fact that the solution of cerium IV salt is an aqueous solution of ceric nitrate or an aqueous solution of ceric ammonium nitrate.

14. Process according to Claim 13, characterized by the fact that the aqueous solution of cerium IV salt is a solution resulting from the electrochemical oxidation of a solution of cerous nitrate.

15. Process according to one of Claims 11 to 14, characterized by the fact that the concentration of the solution of cerium salt expressed in terms of cerium IV lies between 0.1 and 2 moles per litre.

16. Process according to one of Claims 11 to 15, characterized by the fact that the base is an aqueous ammonia solution.

17. Process according to one of Claims 11 to 16, characterized by the fact that the normality of the basic solution lies between 0.1 N and 5 N.

18. Process according to one of Claims 11 to 17, characterized by the fact that the colloidal dispersion of the cerium IV compound is thermally treated at a temperature lying between 80°C and 300°C.

19. Process according to Claim 18, characterized by the fact that the thermal treatment temperature lies between 90°C and 110°C.

20. Process according to one of Claims 10 to 19, characterized in that, before making a suspension of ceric hydroxide, the latter is suspended in water, the said aqueous suspension being heated in a closed vessel to a temperature and a pressure lower than the critical temperature and the critical pressure respectively of the medium.

21. Process according to one of Claims 10 to 20, characterized by the fact that the decomposable base is ammonia, urea, ammonium hydrogen carbonate, ammonium carbonate, a primary, secondary, tertiary or quaternary amine or their mixtures.

22. Process according to Claim 21, characterized by the fact that the decomposable base is ammonia, a tetraalkylammonium hydroxide or their mixtures.

23. Process according to one of Claims 10 to 22, characterized by the fact that the concentration of decomposable base varies between 1 and 10 N.

24. Process according to one of Claims 10 to 23, characterized by the fact that the silicon compound is chosen, singly or in a mixture, from the sols of silica, the siliconates, and the quaternary ammonium silicates.

25. Process according to one of Claims 10 to 24, characterized in that the concentration of ceric hydroxide in the suspension to be autoclaved, varies between 0.1 and 3 moles/litre, expressed in terms of $CeO_2$.

26. Process according to Claim 25, characterized in that the said concentration lies between 0.2 and 1.0 mole/litre.

27. Process according to one of Claims 10 to 26, characterized by the fact that the autoclaving temperature varies between 100 and 350°C.

28. Process according to Claim 27, characterized by the fact that the said temperature lies between 150 and 350°C.

29. Process according to one of Claims 10 to 28, characterized by the fact that the autoclaving pressure varies between 1 Bar ($10^5$ Pa) and 165 Bar ($165 \times 10^5$ Pa).

30. Process according to Claim 29, characterized by the fact that the said pressure lies between 5 Bar ($5 \times 10^5$ Pa) and 165 Bar ($165 \times 10^5$ Pa).

31. Process according to one of Claims 10 to 30, characterized by the fact that the calcination temperature lies between 300 and 1000°C.

32. Composition based on ceric hydroxide, being a precursor of the composition based on ceric oxide defined in one of Claims 1 to 9, characterized in that it is obtained according to a process as defined in any one of Claims 10 to 30, but without implementation of the calcination stage (e).

33. Mixture based on alumina and ceric oxide and/or ceric hydroxide, characterized in that the said ceric oxide is a composition as defined in one of Claims 1 to 9, and the said ceric hydroxide is a composition as defined in Claim 32.

34. Mixture according to Claim 33, characterized in that, after calcination at 1000°C for 6 hours, the size of the ceric oxide crystallites contained in this mixture is less than 200 Å.

**Patentansprüche**

1. Zusammensetzung auf Basis von Cer(IV)-oxid, enthaltend als Stabilisierungsreagenz Silicium, dadurch gekennzeichnet, daß sie eine spezifische Oberfläche von mindestens 40 $m^2$/g, bestimmt nach 6stündiger Calcinierung bei 800 °C, und eine spezifische Oberfläche von mindestens 20 $m^2$/g, bestimmt nach 6stündiger Calcinierung bei 1000 °C, aufweist.

2. Zusammensetzung nach Anspruch 1, dadurch gekennzeichnet, daß die spezifische Oberfläche mindestens 50 $m^2$/g, vorzugsweise mindestens 60 $m^2$/g, beträgt, bestimmt nach Calcinierung bei 800 °C.

3. Zusammensetzung nach Anspruch 1, dadurch gekennzeichnet, daß die spezifische Oberfläche mindestens 70 m$^2$/g, vorzugsweise mindestens 80 m$^2$/g, bestimmt nach Calcinierung bei 600 °C, aufweist.

4. Zusammensetzung nach einem der Ansprüche 1 bis 3, dadurch gekennzeichnet, daß sie nach 6stündiger Calcinierung bei 800 °C aus Kristalliten mit einer Größe zwischen 100 und 200 Å besteht.

5. Zusammensetzung nach einem der vorhergehenden Ansprüche, dadurch gekennzeichnet, daß die spezifische Oberfläche, bestimmt nach Calcinierung bei 1000 °C, mindestens 30 m$^2$/g, vorzugsweise mindestens 40 m$^2$/g, insbesondere mindestens 50 m$^2$/g, beträgt.

6. Zusammensetzung nach einem der vorhergehenden Ansprüche, dadurch gekennzeichnet, daß sie nach 6stündiger Calcinierung bei 1000 °C aus Kristalliten mit einer Größe zwischen 130 und 450 Å besteht.

7. Zusammensetzung nach einem der vorhergehenden Ansprüche, dadurch gekennzeichnet, daß sie eine Menge an Silicium, berechnet als SiO$_2$, von weniger als 2 Gew.-%, bezogen auf Cer(IV)-oxid, enthält.

8. Zusammensetzung nach Anspruch 7, dadurch gekennzeichnet, daß die Siliciummenge weniger als 1 Gew.-%, bezogen auf Cer(IV)-oxid, beträgt.

9. Zusammensetzung nach Anspruch 8, dadurch gekennzeichnet, daß die Siliciummenge zwischen etwa 0,1 Gew.-% und 1 Gew.-%, bezogen auf Cer(IV)-oxid, beträgt.

10. Verfahren zur Herstellung einer Zusammensetzung, wie in einem der vorhergehenden Ansprüche 1 bis 9 beschrieben, dadurch gekennzeichnet, daß es die folgenden Verfahrensschritte umfaßt:

   a) In einer wäßrigen Lösung, enthaltend eine zersetzbare Base und eine Siliciumverbindung, wird ein Cer(IV)-hydroxid suspendiert, das der folgenden allgemeinen Formel (I) entspricht:

$$Ce(M)_x(OH)_y(NO_3)_z \qquad\qquad (I)$$

   in der:

   - M ein Metall oder einen quaternären Ammoniumrest darstellt;
   - x zwischen 0,01 und 0,2 beträgt;
   - y so ist, daß y=4-z+x gilt;
   - z zwischen 0,4 und 0,7 beträgt;

   b) man erhitzt die Suspension in einem geschlossenen Gefäß bis auf eine Temperatur und einen Druck unterhalb der kritischen Temperatur bzw. des kritischen Drucks dieses Milieus;
   c) man kühlt die Reaktionsmischung wieder ab und bringt sie auf Atmosphärendruck;
   d) man trennt das so behandelte Cer(IV)-hydroxid ab;
   e) man calciniert das Cer(IV)-hydroxid.

11. Verfahren nach Anspruch 10, dadurch gekennzeichnet, daß das Cer(IV)-hydroxid der Formel (I) gemäß einem Verfahren erhalten wird, das darin besteht, eine kolloidale Dispersion einer Cer(IV)-Verbindung herzustellen, indem man eine wäßrige Lösung eines Cer(IV)-Salzes und einer Base so reagieren läßt, daß man einen Neutralisationsgrad unterhalb oder gleich 3,0 erhält; die Dispersion einer thermischen Behandlung zu unterwerfen; dann den gebildeten Niederschlag abzutrennen.

12. Verfahren nach Anspruch 11, dadurch gekennzeichnet, daß man die kolloidale Dispersion einer Cer(IV)-Verbindung herstellt, indem man eine wäßrige Lösung eines Cer(IV)-Salzes und einer Base so reagieren läßt, daß man einen Neutralisationsgrad oberhalb oder gleich 0,01 und unterhalb oder gleich 3,0 erhält.

13. Verfahren nach Anspruch 11 oder 12, dadurch gekennzeichnet, daß die Lösung des Cer(IV)-Salzes eine wäßrige Lösung von Cer(IV)-nitrat oder eine wäßrige Lösung von ammoniakalischem Cer(IV)-nitrat ist.

14. Verfahren nach Anspruch 13, dadurch gekennzeichnet, daß die wäßrige Lösung des Cer(IV)-Salzes eine Lösung ist, die aus der elektrochemischen Oxidation einer Cer(III)-nitratlösung stammt.

**15.** Verfahren nach einem der Ansprüche 11 bis 14, dadurch gekennzeichnet, daß die Konzentration der Lösung des Cer(IV)-Salzes, berechnet als Cer(IV), zwischen 0,1 und 2 mol/l beträgt.

**16.** Verfahren nach einem der Ansprüche 11 bis 15, dadurch gekennzeichnet, daß die Base eine wäßrige Ammoniaklösung ist.

**17.** Verfahren nach einem der Ansprüche 11 bis 16, dadurch gekennzeichnet, daß die Normalität der basischen Lösung zwischen 0,1 N und 5 N liegt.

**18.** Verfahren nach einem der Ansprüche 11 bis 17, dadurch gekennzeichnet, daß man die kolloidale Dispersion der Cer(IV)-Verbindung bei einer Temperatur zwischen 80 °C und 300 °C behandelt.

**19.** Verfahren nach Anspruch 18, dadurch gekennzeichnet, daß die Temperatur der thermischen Behandlung zwischen 90 °C und 110 °C beträgt.

**20.** Verfahren nach einem der Ansprüche 10 bis 19, dadurch gekennzeichnet, daß man vor der Suspendierung des Cer(IV)-hydroxids dieses in Wasser suspendiert, wobei die wäßrige Suspension in einem geschlossenen Gefäß auf eine Temperatur und einen Druck unterhalb der kritischen Temperatur bzw. des kritischen Drucks des Milieus erhitzt wird.

**21.** Verfahren nach einem der Ansprüche 10 bis 20, dadurch gekennzeichnet, daß die zersetzbare Base Ammoniak, Harnstoff, Ammoniumhydrogencarbonat, Ammoniumcarbonat ein primäres, sekundäres, tertiäres oder quaternäres Amin oder deren Mischungen ist.

**22.** Verfahren nach Anspruch 21, dadurch gekennzeichnet, daß die zersetzbare Base Ammoniak, Tetralkylammoniumhydroxid oder ihre Mischung ist.

**23.** Verfahren nach einem der Ansprüche 10 bis 22, dadurch gekennzeichnet, daß die Konzentration der zersetzbaren Base zwischen 1 und 10 N variiert.

**24.** Verfahren nach einem der Ansprüche 10 bis 23, dadurch gekennzeichnet, daß die Siliciumverbindung ausgewählt ist, allein oder in Mischung, aus Siliciumciumdioxidsolen, Siliconaten und quaternären Ammoniumsilicaten.

**25.** Verfahren nach einem der Ansprüche 10 bis 24, dadurch gekennzeichnet, daß die Konzentration des Cer(IV)-hydroxids in der im Autoklaven zu behandelnden Suspension zwischen 0,1 und 3 mol/l beträgt, berechnet als $CeO_2$.

**26.** Verfahren nach Anspruch 25, dadurch gekennzeichnet, daß die Konzentration zwischen 0,2 und 1 mol/l beträgt.

**27.** Verfahren nach einem der Ansprüche 10 bis 26, dadurch gekennzeichnet, daß die Temperatur der Autoklavenbehandlung zwischen 100 und 350 °C variiert.

**28.** Verfahren nach Anspruch 27, dadurch gekennzeichnet, daß die Temperatur zwischen 150 und 350 °C beträgt.

**29.** Verfahren nach einem der Ansprüche 10 bis 28, dadurch gekennzeichnet, daß der Druck der Autoklavenbehandlung zwischen 1 bar ($10^5$ Pa) und 165 bar ($165 \cdot 10^5$ Pa) variiert.

**30.** Verfahren nach Anspruch 29, dadurch gekennzeichnet, daß der Druck zwischen 5 bar ($5 \cdot 10^5$ Pa) und 165 bar ($165 \cdot 10^5$ Pa) beträgt.

**31.** Verfahren nach einem der Ansprüche 10 bis 30, dadurch gekennzeichnet, daß die Calcinierungstemperatur zwischen 300 und 1000 °C beträgt.

**32.** Zusammensetzung auf Basis von Cer(IV)-hydroxid, Vorläufer der Zusammensetzung auf Basis von Cer(IV)-hydroxid, definiert in einem der Ansprüche 1 bis 9, dadurch gekennzeichnet, daß man sie gemäß einem wie in einem der Ansprüche 10 bis 30 definierten Verfahren erhält, jedoch ohne Durchführung des Calcinierungsschritts (e).

**33.** Mischung auf Basis von Aluminiumoxid und Cer(IV)-oxid und/oder Cer(IV)-hydroxid, dadurch gekennzeichnet, daß das Cer(IV)oxid eine wie in einem der Ansprüche 1 bis 9 definierte Zusammensetzung ist und das Cer(IV)-hydroxid eine wie in Anspruch 32 definierte Zusammensetzung darstellt.

34. Mischung nach Anspruch 33, dadurch gekennzeichnet, daß die Größe der darin enthaltenen Cer(IV)-oxidkristallite nach 6stündiger Calcinierung bei 1000 °C weniger als 200 Å beträgt.